# EUROPEAN PATENT APPLICATION

(11) **EP 2 698 705 A2**
(43) Date of publication of application: **19.02.2014**
(21) Application number: 13180359.5
(22) Date of filing: 14.08.2013
(51) Int. Cl.: G06F 3/147

(54) **Methods for displaying on a graphical user interface**

(30) Priority: 15.08.2012 US 201213585984
(71) Applicant: GE Aviation Systems LLC, Grand Rapids, MI 49512-1991 (US)
(72) Inventor: Buehler, Eric Daniel, Grand Rapids, MI Michigan 49512 (US); Occhipinti, Benjamin Thomas, Grand Rapids, MI Michigan 49512-1934 (US)
(74) Representative: Williams, Andrew Richard

(57) **Abstract**

Methods of displaying multiple sources of information in a graphical user interface (40) on a display (22) include separately displaying at least some of the multiple sources of information within graphical user interface components (42) within the graphical user interface (40). All of the graphical user interface components (42) within the graphical user interface (40) are displayed including a focus graphical user interface (50).

## Description

### BACKGROUND

As multi-monitor systems become more common place, software designers and users may take for granted the ability to add multiple monitors as needed to accommodate software requirements and/or user preferences. However, in the embedded world, where physical space is limited, and additional monitors cannot readily be added, display "real-estate" still comes at a premium and making the most efficient use of this space is still very desirable. This may be especially true in contemporary aircraft where the display areas in the flight deck are limited.

### BRIEF DESCRIPTION

In one aspect, the invention relates to a method of displaying multiple sources of information in a graphical user interface (GUI) on a display includes separately displaying at least some of the multiple sources of information within GUI components within the GUI, displaying all of the GUI components within the GUI, and displaying a duplicate of one of the GUI components displayed within the GUI at a larger size than any of the other displayed GUI components to define a focus GUI component.

### BRIEF DESCRIPTION OF THE DRAWINGS

In the drawings:
Figure 1 is a perspective view of a portion of an aircraft cockpit with a flight display on which multiple sources of information in a GUI may be displayed according to embodiments of the invention.
Figure 2 is a schematic view of an illustration of a display of GUI components within the GUI according to a first embodiment of the invention.
Figure 3 is a schematic view of an illustration of a selection of one of the GUI components within the GUI according to a second embodiment of the invention.
Figure 4 is a schematic view of an illustration of a display of GUI components within the GUI according to a third embodiment of the invention.
Figures 5A and 5B illustrate schematic views showing a resizing of one of the GUI components within the GUI according to a fourth embodiment of the invention.

### DETAILED DESCRIPTION

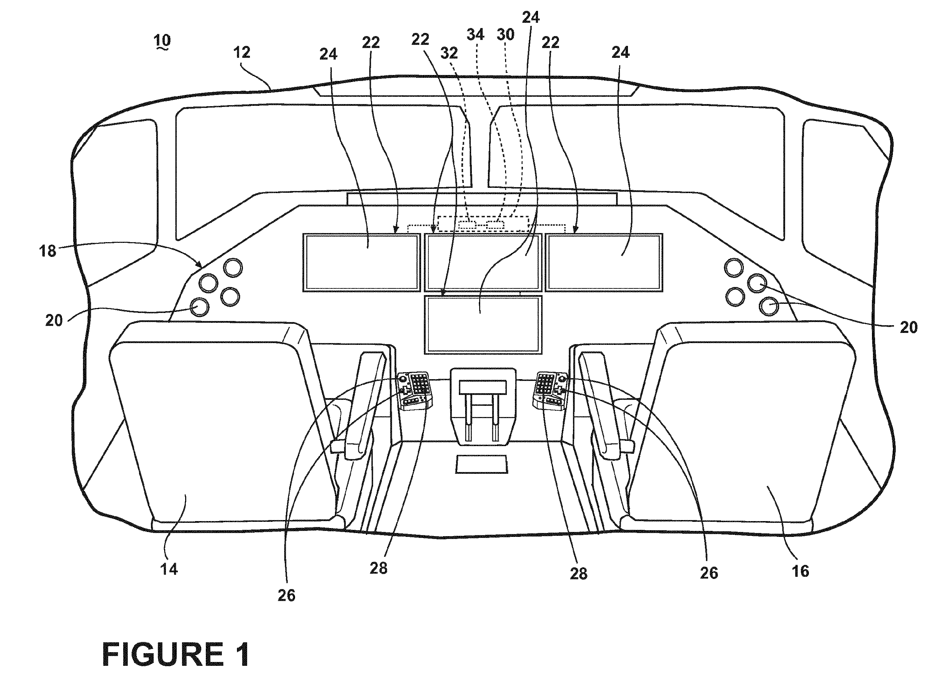

Figure 1 illustrates a portion of an aircraft 10 that may execute embodiments of the invention. It will be understood that any other suitable environment for a display may be used. While a commercial aircraft has been illustrated, it is contemplated that embodiments of the invention may be used in any type of suitable display environment including a personal computer, a hand-held device such as a PDA, and office equipment.

In the exemplary environment of the aircraft 10, a cockpit 12 may include a first user (e.g., a pilot) present in a seat 14 at the left side of the cockpit 12 and another user (e.g., a co-pilot) present at the right side of the cockpit 12 in a seat 16. A cockpit instrument panel 18 having various instruments 20 and multiple multifunction flight displays 22 may be located in front of the pilot and co-pilot and may provide the flight crew with information to aid in flying the aircraft 10.

The flight displays 22 may include either primary flight displays or multi-function displays and may display a wide range of aircraft, flight, navigation, and other information used in the operation and control of the aircraft 10. The flight displays 22 may be capable of displaying color graphics and text to a user. The flight displays 22 may be laid out in any manner including having fewer or more displays and need not be coplanar or the same size. A touch screen display or touch screen surface 24 may be included in the flight display 22 and may be used by one or more flight crew members, including the pilot and co-pilot, to interact with the systems of the aircraft 10. It is contemplated that one or more cursor control devices 26 and one or more multifunction keyboards 28 may be included in the cockpit 12 and may also be used by one or more flight crew members to interact with the systems of the aircraft 10.

A controller 30 may be operably coupled to components of the aircraft 10 including the flight displays 22, touch screen surface 24, cursor control devices 26, and multifunction keyboards 28. The controller 30 may also be connected with other controllers (not shown) of the aircraft 10. The controller 30 may include memory 32 and a processor 34, which may be running any suitable programs to implement a GUI and operating system. These programs typically include a device driver that allows the user to perform functions on the touch screen surface 24 such as selecting options, inputting commands and other data, selecting and opening files, and moving icons through the touch screen surface 24. The memory 32 may include random access memory (RAM), read-only memory (ROM), flash memory, or one or more different types of portable electronic memory, such as discs, DVDs, CD-ROMs, etc., or any suitable combination of these types of memory. The controller 30 may also be connected with other controllers (not shown) of the aircraft 10. A computer searchable database of information may be stored in the memory 32 and accessible by the processor 34 or the controller 30 may be operably coupled to a database of information. For example, such a database may be stored on an alternative computer or controller. It will be understood that the database may be any suitable database, including a single database having multiple sets of data, multiple discrete databases linked together, or even a simple table of data. The controller 30 may also receive information from various sources including external memory, communication links such as a wireless communication link, and additional controllers or processors.

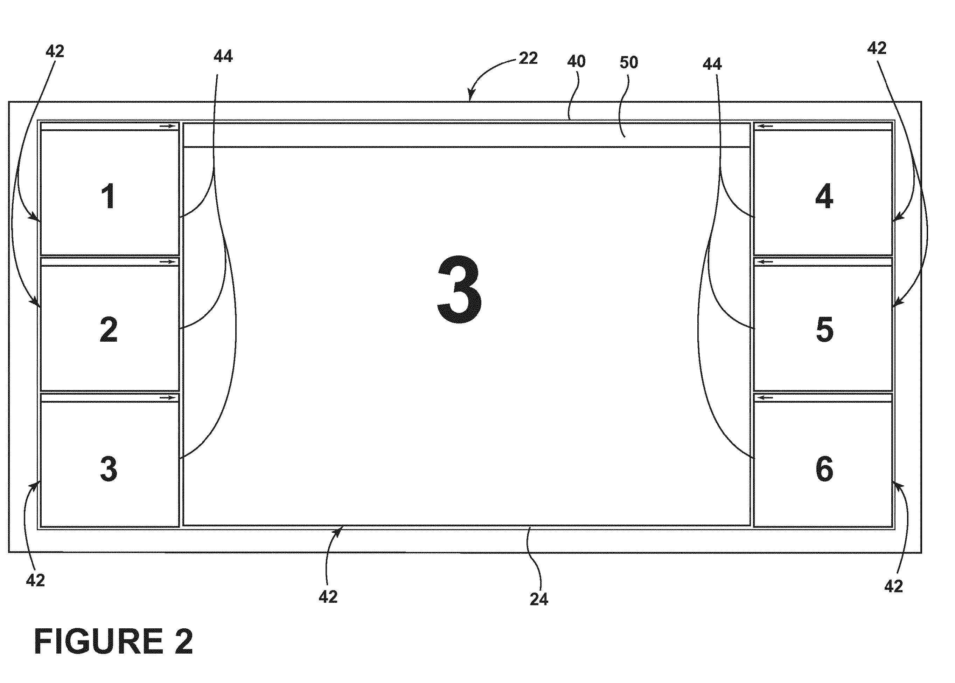

During operation, the controller 30 may utilize inputs from the pilot, the database, and/or various other sources to display multiple sources of information in a GUI on the flight display 22 of the aircraft 10. Referring now to Figure 2, a first embodiment showing a display of multiple sources of information in a GUI 40 is illustrated. The GUI 40 may be implemented over an entirety of the flight display 22 or a portion of the flight display 22.

Multiple sources of information may be separately displayed within multiple GUI components 42 within the GUI 40 on the flight display 22. The GUI 40 has been illustrated as covering an entirety of the flight display 22 although this need not be the case. The multiple sources of information have been labeled 1, 2, 3, 4, 5, and 6 for ease of reference and clarity. It will be understood that such multiple sources of information may be any suitable sources of information and that what source of information is displayed on each of the multiple GUI components 42 at any one time may be changed and controlled by the controller 30. During operation, each of the multiple GUI components 42 may be continuously updated by the controller 30 and the respective source of information and each of the multiple GUI components 42 may include user inputs, which may be interacted with by a user. In this manner a user may interact with various systems, sources of information, etc. on the flight display 22.

All of the multiple GUI components 42 may be displayed within the GUI 40 on the flight display 22. In the illustrated example, the GUI 40 has multiple GUI components 42 showing six sources of information. This is merely for illustrative purposes and it will be understood that the GUI 40 may have any suitable number of multiple GUI components 42 showing any number of sources of information. Further, the controller 30 may be capable of receiving input from a user regarding what number of multiple GUI components 42 to display. Initially upon display, the multiple GUI components 42 may be displayed in a default size and arrangement. The multiple GUI components 42 may be thought of as including multiple viewing components 44 and one or more focus GUI components 50. For example, the multiple viewing components 44 of the multiple GUI components 42 have been displayed on the leftmost and rightmost perimeter of the flight display 22 and are of a smaller size. Further, a focus GUI component 50 is also displayed; the focus GUI component 50 is a duplicate of one of the other multiple GUI components 42 and is displayed within the GUI 40 at a larger size than any of the other displayed multiple GUI components 42. The term duplicate is used here to mean that the focus GUI component 50 includes the same source of information, thus two of the multiple GUI components 42 including the focus GUI component 50 are labeled with the third source of information. A user would be able to equally interact with either the focus GUI component 50 and/or the corresponding one of the multiple viewing components 44 having the same source of information.

For example, in the case of the source information being a video signal, the focus GUI component 50 would display the same video signal as the corresponding GUI component 42. While it is contemplated that the same source information will be displayed in the same manner for both the GUI component 42 and the focus GUI component 50, it is within the scope of the invention for the same source information to be displayed differently. For example, the video signal displayed in the focus GUI component 50 may be cropped differently than the video signal in the corresponding GUI component 42.

Although the focus GUI component 50 may be considered to be the one of the multiple GUI components 42 a user is likely to focus on it will be understood that the focus GUI component 50 does not completely obscure any of the other displayed multiple GUI components 42 and any of the displayed multiple GUI components 42 as well as the focus GUI component 50 may be used at any time. In the illustrated example, the focus GUI component 50 does not obscure any of the other displayed multiple GUI components 42; although this need not be the case and the focus GUI component 50 may at least partially obscure one or more of the other displayed multiple GUI components 42.

In the illustrated example, the other displayed multiple GUI components 42 and the focus GUI component 50 are arranged in a tile configuration. Such as tile configuration aids the user's ability to interact with any of the displayed multiple GUI components 42 as well as the focus GUI component 50. The focus GUI component 50 is displayed in a larger size tile than the other displayed multiple GUI components 42 for ease of use by the user. The multiple viewing components 44 have been illustrated as being the same size tiles although this need not be the case.

The focus GUI component 50 may be located at a predetermined location in the GUI 40. For example, the focus GUI component 50 may be centered within the GUI 40. This may also include the focus GUI component 50 being located at a focus position within the GUI 40. If the flight display 22 is offset from a location of the user, such as being to the right of the user, such a focus position may be at the left side of the GUI 40.

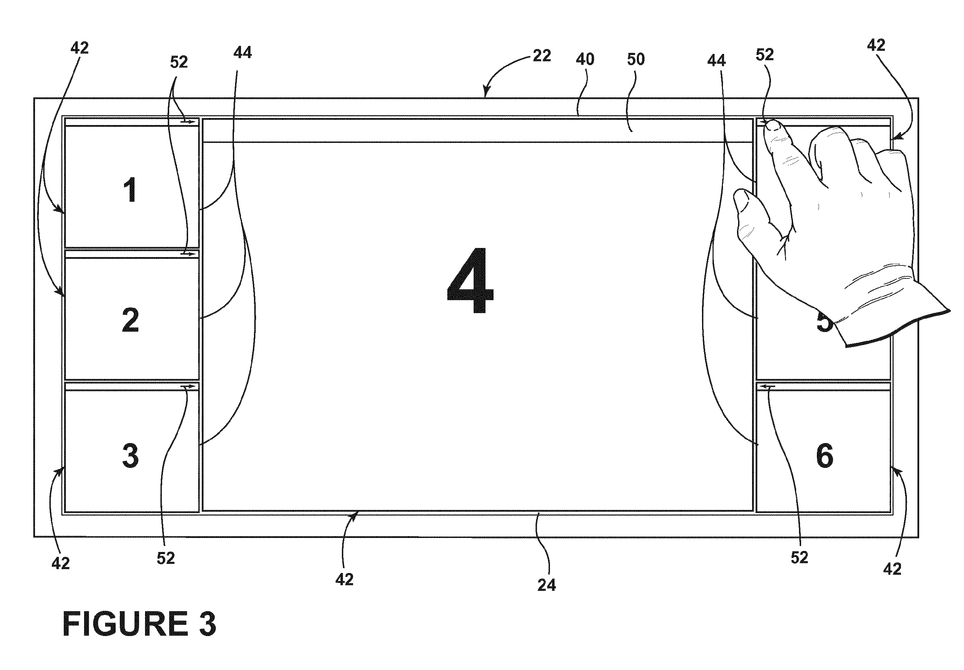

It is contemplated that another one of the other displayed multiple GUI components 42 may be displayed as the focus GUI component 50 in response to a user input. Figure 3 is a schematic view of an illustration of a selection of another one of the multiple GUI components 42 within the GUI 40 according to a second embodiment of the invention. In the illustrated example, each of the GUI components includes a selector 52, which when selected by a user automatically makes that GUI component 42 the focus GUI component 50. The selector 52 may include any suitable indicia to define or indicate the purpose of the selector 52. Alternatively, the selector 52 may correlate with a portion of the multiple GUI components 42 and no indicia may be included. For example, a user may select a specific spot of one of the multiple GUI components 42, such as the upper right corner of one of the multiple GUI components 42 to select it to be displayed as the focus GUI component 50. By way of nonlimiting example, selection of one of the multiple viewing components 44 to be displayed as the focus GUI component 50 may be achieved using one of the cursor control devices 26 and /or one of the multifunction keyboards 28. Alternatively, it has been contemplated that the selector 52 may be included in the touchscreen surface 24 and that selection of one of the multiple GUI components 42 to be displayed as the focus GUI component 50 may be achieved through interaction with the touchscreen as illustrated in Figure 3. More specifically, it has been illustrated that the user has selected the fourth source of information to be displayed on the focus GUI component 50.

As yet another alternative, a selector may not be included in the GUI 40 and a button on one of the multifunction keyboards 28 may allow a user to select one of the multiple GUI components 42 to be displayed as the focus GUI component 50. Further still, voice commands may be received by the controller 30 regarding which one of the multiple GUI components 42 the user desires to be displayed as the focus GUI component 50. It is also contemplated that the focus GUI component 50 may be selected based on events occurring in the multiple GUI components 42. In this manner, the controller 30 may automatically display as the focus GUI component 50 one of the multiple GUI components 42 when a specific event occurs. In this manner, the controller 30 may notify the user of the event by automatically enlarging one of the multiple GUI components 42 to be displayed as the focus GUI component 50 based on previously specified criteria.

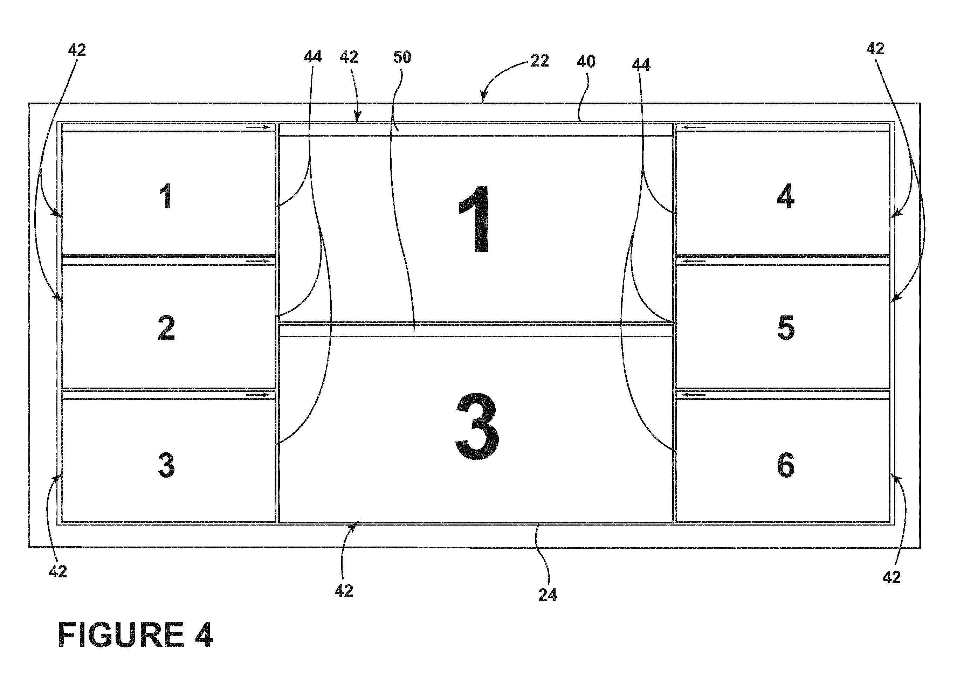

Figure 4 is a schematic view of an illustration of a display of GUI components within the GUI 40 according to a third embodiment of the invention. More specifically, the display of the multiple GUI components 42 includes the display of multiple focus GUI components 50. In the illustrated example, the focus GUI components 50 are duplicates of the first and third sources of information also displayed in two of the multiple viewing components 44. Although each of the multiple focus GUI components 50 are the same size and centered within the GUI 40 this need not be the case. The focus GUI components 50 may be sized and arranged in any suitable manner.

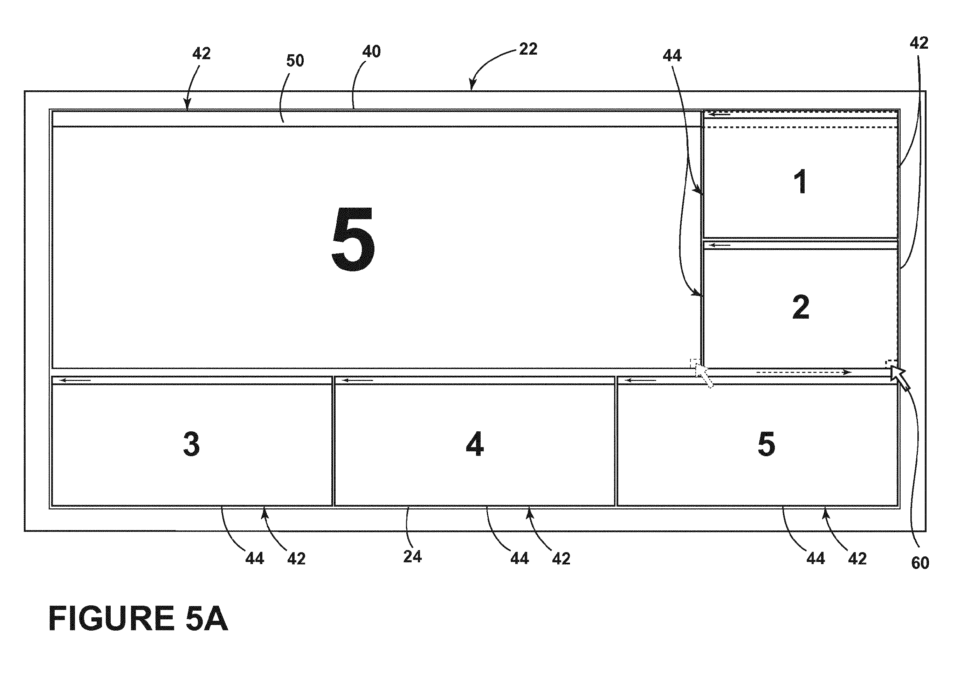

As illustrated in Figure 5A at least one of the multiple GUI components 42 may be resized. This may include that the multiple viewing components 44 and/or the focus GUI component 50 may be resized. Based on the resizing of the GUI components the display of any number of the other GUI components may be adjusted. In the illustrated example, the focus GUI component 50 is resized through use of a mouse 60 controlled by one of the cursor control devices 26. It is contemplated that the focus GUI component 50 may be resized in any suitable manner including by use of one of the multifunction keyboards 28 or the touch screen surface 24.

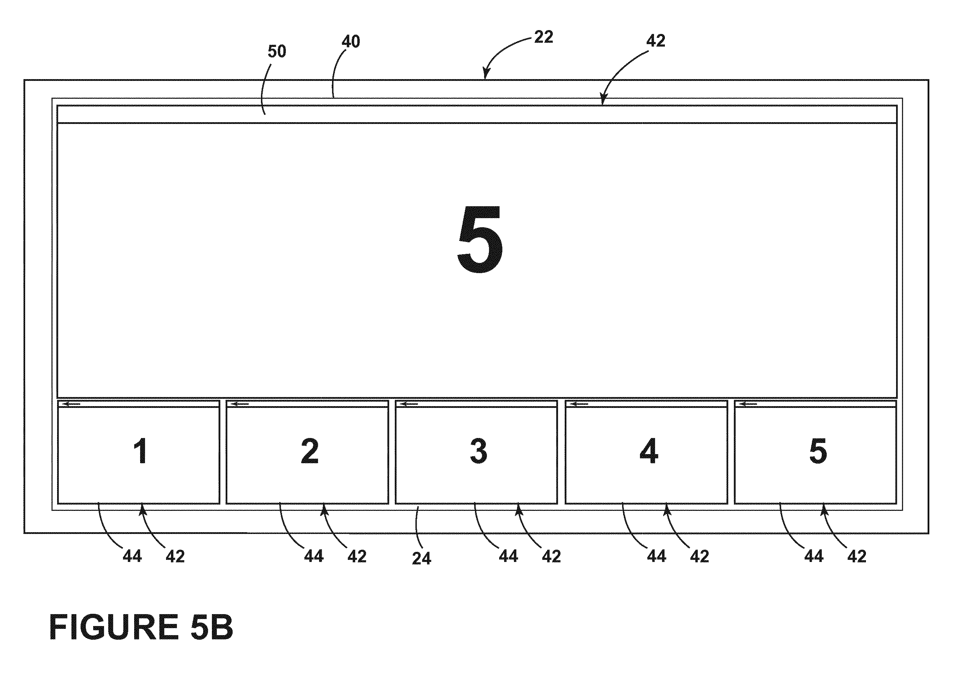

For exemplary purposes, the focus GUI component 50 has been illustrated as being resized by the user over at least one of the multiple viewing components 44. In such an instance, the multiple viewing components 44 may be resized so that all of the multiple viewing components 44 remain visible. For example, as illustrated in Figure 5B the multiple viewing components 44 have been rearranged and resized so that they remain visible and completely un-obscured at the bottom edge of the GUI 40.

The above described embodiments provide a variety of benefits including that the flight display may be more efficiently used. A beneficial effect of the embodiments of the invention is that the user may have multi-data awareness through a variety of GUI components and may multitask using all of the displayed GUI components. Unlike prior displays that utilize dialog boxes, tabbed windows, and buttons to advance the GUI with attached breadcrumbs, etc. the above described embodiments allows for all of the multiple GUI components to be continuously updated regardless of size or location. Furthermore, the user can always interact with any GUI component regardless or its size or location.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of displaying multiple sources of information in a graphical user interface (GUI) (40) on a display (22), the method comprising:
separately displaying at least some of the multiple sources of information within GUI components (42) within the GUI (40);
displaying all of the GUI components (42) within the GUI (40); and
displaying a duplicate of one of the GUI components displayed within the GUI at a larger size than any of the other displayed GUI components to define a focus GUI component (50).

2. The method of claim 1, wherein the focus GUI component (50) does not completely obscure any of the other displayed GUI components (42).

3. The method of either of claim 1 or 2, wherein the focus GUI component (50) does not obscure any of the other displayed GUI components (42).

4. The method of claim 3, wherein the other displayed GUI components (42) and the focus GUI component (50) are arranged in a tile configuration, with the focus GUI component being a larger size tile.

5. The method of claim 4, wherein the other displayed GUI components (42) are same size tiles.

6. The method of any of the preceding claims, wherein the focus GUI component (50) is located at a predetermined location in the GUI (40).

7. The method of claim 6, wherein the focus GUI component (50) is centered within the GUI (40).

8. The method of any of the preceding claims, wherein the focus GUI component (50) is located at a focus position within the GUI (40) and preferably wherein the focus position comprises the center of the GUI.

9. The method of claim 8, wherein the other displayed GUI components (42) are a same size.

10. The method of any of the preceding claims, further comprising displaying another one of the other displayed GUI components (42) as the focus GUI component (50) in response to a user input.

11. A method for using space on a graphical user interface (GUI) (40) comprises:
displaying multiple GUI components (42) on the GUI (40), where the multiple GUI components include multiple viewing GUI components and at least one focus GUI component (50) that is larger than the multiple viewing GUI components; and
wherein the displayed at least one focus GUI component includes a duplicate of one of the displayed multiple viewing GUI components.

12. The method of claim 11, further comprising resizing at least one of the GUI components (42).

13. The method of claim 12, further comprising adjusting the displaying of the multiple GUI components (42) based on the resizing of at least one of the GUI components (42).

14. The method of claim 13, wherein when the at least one focus GUI component (50) is resized over at least one of the multiple viewing GUI components (42), the at least one of the multiple viewing GUI components will resize so that all of the multiple GUI components remain visible.

15. The method of any of claims 11 to 14, wherein the displayed multiple GUI components (42) include multiple focus GUI components (50).
